# FASCICULE DE BREVET EUROPEEN

(11) **EP 2 379 948 B1**
(45) Date de publication et mention de la délivrance du brevet: **17.10.2018**
(21) Numéro de dépôt: 10707313.2
(22) Date de dépôt: 19.01.2010
(51) Int. Cl.: A47J 37/06, A47J 37/12, F24C 7/08, A47J 37/04, A47J 39/00

(54) **APPAREIL DE CUISSON AVEC DISPOSITIF DE SECURITE**
KOCHGERÄT MIT SICHERHEITSVORRICHTUNG
COOKING APPLIANCE WITH A SAFETY DEVICE

(30) Priorité: 19.01.2009 FR 0950293
(43) Date de publication de la demande: 26.10.2011
(73) Titulaire: SEB S.A., 69130 Ecully (FR)
(72) Inventeur: PETIT, Michel, 21000 Dijon (FR); POROT, Yves, Dominique, Marie, 21380 Asnieres les Dijon (FR); SEURAT, Frédéric, 21490 Bretigny (FR)
(74) Mandataire: Regimbeau
(86) Numéro de dépôt international: PCT/FR2010/050071
(87) Numéro de publication internationale: WO 2010/082005

(56) Documents cités:
- WO-A-2006/000700
- DE-A1-102007 041 135
- US-A- 5 111 028
- US-A- 5 289 158
- US-A1- 2004 089 648

## Description

La présente invention concerne un appareil de cuisson, et plus particulièrement, un dispositif de sécurité associé à un tel appareil.

On connaît un appareil de cuisson du type comportant une cuve adaptée à recevoir un aliment à cuire, un ventilateur adapté à générer un flux d'air, un moteur adapté à entraîner le ventilateur, un déflecteur adapté à orienté le flux d'air dans la cuve, et un élément électrique de chauffe disposé entre le ventilateur et la cuve et adapté à chauffer l'air.

Un tel appareil est par exemple divulgué dans la demande WO 2006/000700. Dans ce document, l'appareil est une friteuse permettant de frire avec une très faible quantité d'huile, du fait, d'une part, du flux d'air chaud, et, d'autre part, de la présence d'une pale montée rotative dans la cuve et adaptée à déplacer les aliments à cuire. Un autre appareil de cuisson est connu du document US 2004/0089648 A.

La présente invention vise à réaliser un nouvel appareil ayant une sécurité accrue.

Selon l'invention, l'appareil du type précité comprend un dispositif de sécurité adapté à couper l'alimentation électrique de l'élément électrique de chauffe quand la consommation électrique du moteur est hors d'une zone normale de fonctionnement définie par une borne supérieure et une borne inférieure.

Ainsi, selon l'invention, le même dispositif permet de couper l'alimentation électrique de l'élément électrique de chauffe quand le moteur est à l'arrêt tant en raison d'un défaut d'alimentation de ce dernier (sa consommation est faible - voire nulle - et donc inférieure à la borne inférieure de la zone normale de fonctionnement) qu'en raison d'un blocage mécanique du moteur (sa consommation est importante et donc supérieure à la borne supérieure de la zone normale de fonctionnement).

D'autres particularités et avantages de la présente invention apparaîtront dans la description d'un mode de réalisation donné à titre d'exemple non limitatif et illustré par les dessins mis en annexe dans lesquels :
La figure 1 est une vue en coupe d'un exemple de réalisation d'un appareil de cuisson d'aliments selon l'invention ;
La figure 2 est une vue en coupe de l'appareil illustré sur la figure 1, dans laquelle la cuve de l'appareil a été retirée ;

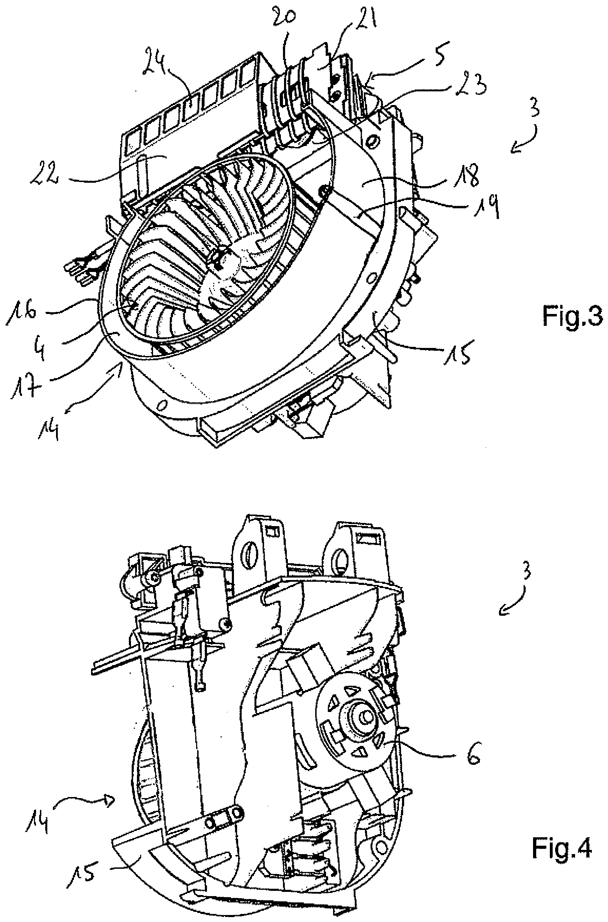

La figure 3 est une vue en perspective du dispositif de chauffage de l'appareil illustré sur les figures 1 et 2, les moyens de chauffe étant représentés en écorché partiel ;
La figure 4 est une vue en perspective arrière et en écorché partiel du dispositif de ventilation de l'appareil illustré sur les figures 1 et 2 ;
La figure 5 est un schéma du circuit électrique de l'appareil de cuisson illustré sur les figures 1 et 2, incluant le dispositif de sécurité ;
La figure 6 est un schéma du circuit électrique du dispositif de sécurité de la figure 5, et de son environnement proche ;
La figure 7 est un schéma illustrant l'effet du dispositif de sécurité ; et
La figure 8 est un schéma illustrant le phénomène d'hystérésis lié au dispositif de sécurité.

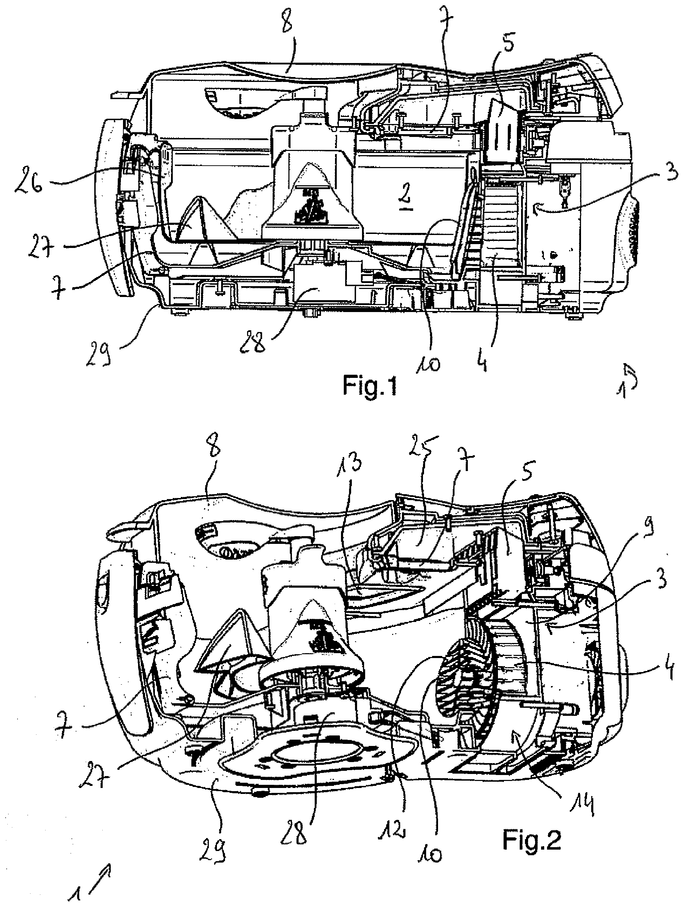

L'appareil de cuisson d'aliments 1 illustré sur la figure 1 (ici, une friteuse électrique permettant de frire les aliments par circulation du flux d'air chaud) comporte une enceinte de cuisson 2, un dispositif de production d'air chaud 3 qui comprend un ventilateur 4 et un dispositif électrique de chauffe 5 disposé dans le flux d'air généré par le ventilateur 4, et un moteur de ventilation 6 adapté à entraîner le ventilateur 4.

Dans l'exemple de réalisation illustré sur les figures, l'enceinte de cuisson 2 est délimitée, d'une part, par un boîtier 7 présentant une ouverture supérieure pour permettre l'accès à l'enceinte de cuisson 2, et, d'autre part, un couvercle 8 adapté à recouvrir cette ouverture.

Dans le présent exemple, afin d'améliorer le contrôle de l'introduction de l'air chaud dans l'enceinte de cuisson 2, le dispositif de production d'air chaud 3 (le ventilateur 4 et le dispositif électrique de chauffe 5) est agencé dans un conduit 9 qui est relié à l'enceinte de cuisson 2 par une entrée d'air 10 et une sortie d'air 11. Cette disposition permet également d'obtenir un chauffage à air pulsé avec un débit d'air important.

Dans le présent exemple, le ventilateur 4 est agencé en amont du dispositif électrique de chauffe 5, ce qui permet de simplifier la construction du ventilateur 4.

L'entrée d'air 10 est ménagée dans une paroi (ici, latérale) du boîtier 7 et, dans le présent exemple, elle comporte une grille 12 adaptée à protéger le dispositif de production d'air chaud 3, et notamment le ventilateur 4 qui, ici, est situé juste derrière l'entrée d'air 10 (Ce qui permet une meilleure aspiration de l'air contenu dans l'enceinte de cuisson 2). La sortie d'air 11, quant à elle, est ménagée dans le couvercle 8. En outre, dans le présent exemple, dans le couvercle 8 est ménagée une autre sortie d'air 13 à côté de la sortie d'air 11.

Le ventilateur 4 et le moteur de ventilation 6 appartiennent à une unité de ventilation 14 qui comporte également un châssis 15 portant le ventilateur 4.

Le ventilateur 4 est un ventilateur centrifuge dont le moyeu est situé au droit de l'entrée d'air 10. Ainsi l'aspiration est axiale et l'expulsion latérale, ce qui permet de générer un flux d'air important tout en utilisant un ventilateur 4 peu encombrant.

Le châssis 15 définit partiellement le conduit 9 et comporte une paroi déflectrice 16 entourant à distance, de façon annulaire, le ventilateur 4 de façon à ménager un canal 17 avec ce dernier. Cette paroi déflectrice 16 permet de canaliser le flux d'air issu du ventilateur 4 vers le dispositif électrique de chauffe 5, la section du canal 17 augmentant en direction de ce dernier.

Le dispositif électrique de chauffe 5 comporte un élément chauffant résistif 20, un support isolant 21 sur lequel l'élément chauffant résistif 20 est bobiné, et un boîtier 22, métallique, logeant l'élément chauffant résistif 20 et le support isolant 21. Cette disposition permet d'obtenir un dispositif électrique de chauffe 5 apte à chauffer l'air à des températures supérieures à 200°C, tout en permettant une construction simple de l'appareil 1.

Dans le présent mode de réalisation, afin d'avoir un air canalisé dans le dispositif électrique de chauffe 5 et donc une meilleure diffusion de la chaleur issue de ce dispositif, ce dernier comprend une admission d'air 23 et une évacuation d'air 24. L'admission d'air 23 et l'évacuation d'air 24 sont formées par des ouvertures réalisées dans le boîtier 22, de part et d'autre de l'élément chauffant résistif 20. L'admission d'air 23 est agencée face au ventilateur 4 et est formée par la partie du canal 17 non bordée par la paroi déflectrice 16. L'évacuation d'air 24 est définie par une série d'ouvertures disposées au niveau du couvercle 8.

Dans le présent exemple, un déflecteur 25 permet de dévier l'air issu du dispositif électrique de chauffe 5 dans l'enceinte de cuisson 2. Ici, ce déflecteur 25 appartient au couvercle 8 et forme la partie du conduit 9 qui s'étend de l'évacuation d'air 24 à la sortie d'air 11.

Le déflecteur 25 est réalisé en matière plastique apte à résister à la température de l'air issu du dispositif électrique de chauffe 5 (par exemple en PBT), ce qui permet de simplifier la construction de l'appareil 1.

L'appareil de cuisson 1 comprend, dans l'enceinte de cuisson 2, une cuve 26 qui est adaptée à recevoir un aliment à cuire, une pale 27 qui est montée rotative dans la cuve 26 et qui est adaptée à brasser les aliments et l'huile. L'appareil comprend également un moteur électrique d'agitation 28 qui est adapté à entraîner la rotation de la pale 27, ce moteur d'agitation 28 étant disposé sous l'enceinte de cuisson 2.

Enfin, l'appareil de cuisson 1 comprend une coque externe 29 qui protège de l'extérieur l'enceinte de cuisson 2, un dispositif de production d'air chaud 3, le moteur de ventilation 6, le moteur d'agitation 28 et l'ensemble des composants électriques permettant l'alimentation et le contrôle du dispositif électrique de chauffe 5 et des deux moteurs 6, 28. Cette coque 29 comporte une ouverture supérieure d'accès que le couvercle 8 obstrue.

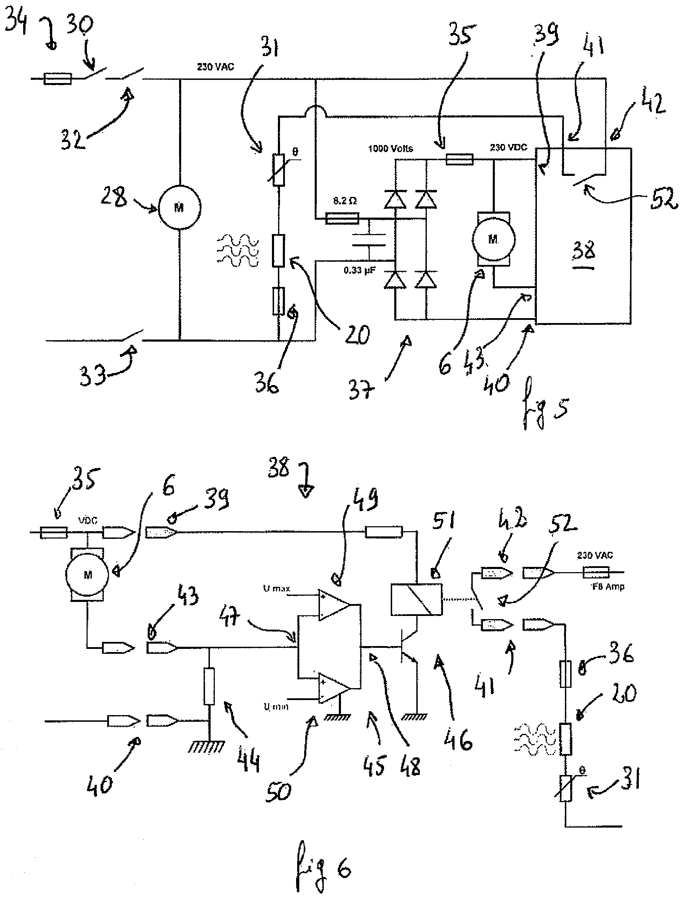

Le circuit électrique de l'appareil de cuisson 1 est représenté à la figure 5.

L'appareil de cuisson 1 comprend un interrupteur général 30 permettant de commander son alimentation électrique et un thermostat 31 permettant de contrôler la température de chauffe de l'élément chauffant résistif 20.

Pour des raisons de sécurité, l'appareil de cuisson 1 comporte également deux interrupteurs 32, 33 auxiliaires ne permettant l'alimentation de l'ensemble de l'appareil que si le couvercle 8 est fermé. De plus, les organes électriques sont protégés par différents fusibles électriques 34, 35 : un premier 34 pour la protection générale du circuit électrique, et un second 35 pour la protection du moteur de ventilation 6. De plus, l'élément chauffant résistif 20 est protégé par un fusible thermique 36.

Par ailleurs, un pont à diodes 37 permet de redresser le courant électrique nécessaire à l'alimentation du moteur de ventilation 6. Ce pont à diodes 37 peut supporter 1000V.

Selon l'invention, l'appareil de cuisson 1 comprend également un dispositif de sécurité 38 qui est adapté à couper l'alimentation électrique de l'élément chauffant résistif 20 quand la consommation électrique du moteur de ventilation 6 est hors d'une zone normale de fonctionnement définie par une borne supérieure et une borne inférieure.

Le dispositif de sécurité 38 est formé par un module électronique 38 qui possède cinq connecteurs : deux 39, 40 pour son alimentation, deux 41, 42 pour sa liaison avec l'élément chauffant résistif 20, et un 43 pour mesurer l'alimentation du moteur de ventilation 6 et la comparer avec les bornes de la zone normale de fonctionnement. Les trois connecteurs 39, 40, 43 associés au moteur de ventilation 6 sont alimentés en courant redressé et sont donc en liaison avec le pont à diodes 37.

De préférence, ce module électronique 38 est inséré dans un logement proche du moteur de ventilation 6. Ici, le thermostat 31 et le fusible thermique 36 sont en contact avec le boîtier métallique 22.

Dans le présent exemple, le dispositif de sécurité 38 comprend un élément de mesure 44 qui est adapté à mesurer le courant électrique consommé par le moteur de ventilation 6, un comparateur 45 qui est adapté à comparer la consommation du moteur de ventilation 6 avec les bornes de la zone normale de fonctionnement, et un relais de puissance 46 qui est adapté à couper l'alimentation électrique de l'élément chauffant résistif 20 en fonction du résultat de la comparaison.

De façon plus précise, l'élément de mesure 44 est formé par une résistance de puissance 44 qui relie le connecteur 43 qui est branché avec la sortie du moteur de ventilation au connecteur 40 qui est branché directement avec le pont à diodes 37 (la masse). Dans le présent exemple, cette résistance 44 a une puissance de 2 W.

Le comparateur 45 comprend une entrée 47 reliée à l'élément de mesure 44 et une sortie 48 reliée au relais de puissance 46, la sortie 48 fournissant un courant électrique en tout ou rien. De façon plus précise, le comparateur 45 comprend deux éléments de comparaison 49, 50, chaque élément de comparaison 49, 50 comparant l'alimentation mesurée avec l'une des deux bornes de la zone de fonctionnement. Chaque élément de comparaison 49, 50 comprend une broche d'entrée qui est reliée à l'entrée 47 du comparateur 45, une broche de sortie qui est reliée à la sortie 48 de ce dernier, et une broche associée à la borne correspondante de la zone de fonctionnement.

Le relais de puissance 46 comporte, d'une part, un actionneur 51 qui est relié à la sortie 48 du comparateur 45 et au connecteur 39 branché à l'entrée du moteur de ventilation 6, et, d'autre part, un interrupteur 52 qui est connecté aux deux connecteurs 41, 42 reliés à l'élément chauffant résistif 20. L'actionneur 51 est commandé selon la présence ou non d'un curant en sortie du comparateur 45, et entraîne en conséquence la fermeture ou l'ouverture de l'interrupteur 52.

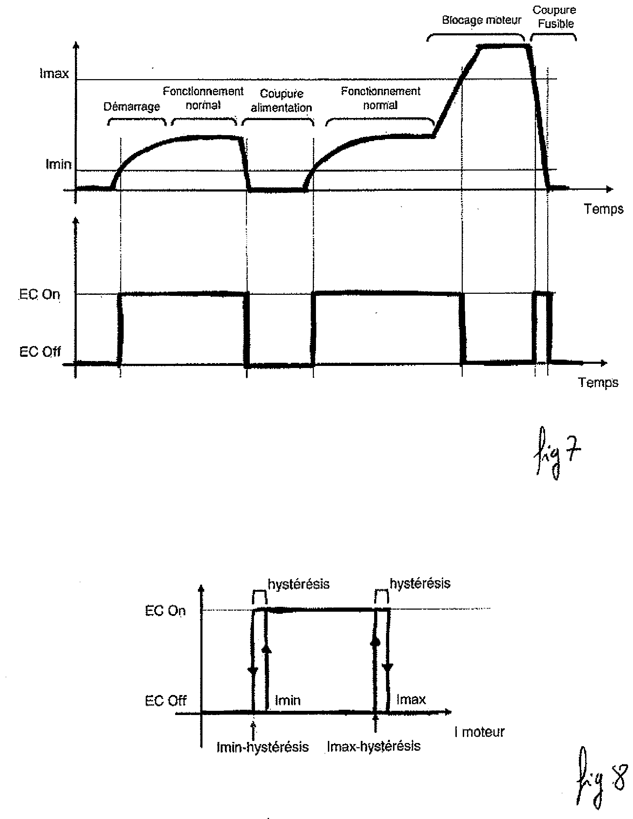

La figure 7 illustre le fonctionnement du dispositif de sécurité 38 : en partie haute est illustrée la variation temporelle de l'intensité en sortie de l'élément de mesure 44, et, en partie basse est illustrée la variation temporelle correspondante de l'état de l'alimentation de l'élément chauffant résistif 20. Il apparaît clairement que, quand le moteur de ventilation 6 n'est pas alimenté, l'intensité mesurée est inférieure à la borne inférieure Imin et l'élément chauffant résistif 20 n'est pas alimenté ; quand le moteur de ventilation 6 est bloqué mécaniquement, l'intensité mesurée est supérieure à la borne supérieure Imax et l'élément chauffant résistif 2 n'est pas alimenté non plus (le fusible thermique 36 protégeant l'élément chauffant résistif 20) ; et quand le moteur de ventilation 6 fonctionne, l'intensité mesurée est dans la zone de fonctionnement et l'élément chauffant résistif 2 est alimenté.

Par ailleurs, la figure 8 illustre le phénomène d'hystérésis lié au dispositif de sécurité 38 (au comparateur 45) permettant d'éliminer les vibrations du relais de puissance 46 lors de son changement d'état.

A titre d'exemple, pour un appareil 1 alimenté par un courant de 230 V en alternatif, avec la résistance de mesure 44 de 2 W, les deux bornes de la zone normale peuvent être de 60 mA (+/- 20 mA) et de 230 mA (+/- 20 mA). Plus précisément, les valeurs indiquées ci-dessus concernent le changement d'états du relais de puissance 44 de son état ouvert à son état fermé. Pour le changement d'états dans le sens inverse, les valeurs sont diminuées de 40 mA. Pour le même appareil alimenté par un courant de 120 V, les deux bornes de la zone normale peuvent être de 130 mA (+/- 40 mA) et de 500 mA (+/- 40 mA), la valeur de l'hystérésis étant de 80 mA.

La présente invention n'est nullement limitée à l'exemple de réalisation décrit, mais englobe de nombreuses modifications dans le cadre des revendications.

Ainsi, le ventilateur et le dispositif électrique de chauffe ne sont pas nécessairement agencés dans un conduit relié à l'enceinte de cuisson. Notamment, le ventilateur et/ou le dispositif électrique de chauffe peuvent être disposés dans l'enceinte de cuisson. De plus, le ventilateur n'est pas nécessairement un ventilateur centrifuge. De même, le dispositif électrique de chauffe peut ne pas comporter de boîtier métallique logeant un élément chauffant résistif bobiné sur un support isolant. Il peut également ne pas comprendre pas une admission d'air et une évacuation d'air.

Il est également possible que le déflecteur ne soit pas ménagé dans un conduit, ou même que l'air issu du dispositif de production d'air chaud soit envoyé directement dans l'enceinte de cuisson.

## Revendications

1. Appareil de cuisson d'aliments (1) comportant :
- une enceinte de cuisson (2)
- un dispositif de production d'air chaud (3) comprenant un ventilateur (4) et un dispositif électrique de chauffe (5) disposé dans le flux d'air généré par le ventilateur (4), le dispositif de production d'air chaud (3) étant agencé dans un conduit (9) relié à l'enceinte de cuisson (2) par une entrée d'air (10) et une sortie d'air (11), le dispositif électrique de chauffe comprenant une admission d'air (23) reliée à l'entrée d'air (10) et une évacuation d'air (24) reliée à la sortie d'air (11),
- un moteur de ventilation (6) adapté à entrainer le ventilateur (4),
**caractérisé en ce que**:
- il comporte un dispositif de sécurité (38) adapté à couper l'alimentation électrique du dispositif électrique de chauffe (5), quand la consommation électrique du moteur de ventilation (6) est hors d'une zone normale de fonctionnement définie par une borne inférieure et une borne supérieure,
- le dispositif de sécurité (38) comprend:
* un élément de mesure (44) adapté à mesurer le courant électrique consommé par le moteur de ventilation (6),
* un comparateur (45) adapté à comparer la consommation du moteur de ventilation (6) avec la borne inférieure et la borne supérieure de la zone normale de fonctionnement,
* et un relais de puissance (46) adapté à couper l'alimentation électrique du dispositif électrique de chauffe (5) en fonction du résultat de la comparaison,
- et le comparateur (45) présente un phénomène d'hystérésis à la borne inférieure et à la borne supérieure de la zone normale de fonctionnement, assurant une alimentation d'un élément chauffant résistif (20) du dispositif électrique de chauffe (5) quand le moteur de ventilation (6) fonctionne et quand l'intensité mesurée est dans la zone normale de fonctionnement.

2. Appareil de cuisson (1) selon la revendication 1, **caractérisé en ce que** le dispositif de sécurité (38) est formé par un module électronique (38).

3. Appareil de cuisson (1) selon la revendication 2, **caractérisé en ce que** le module électronique (38) est inséré dans un logement proche du moteur de ventilation (6) .

4. Appareil de cuisson (1) selon la revendication 2 ou 3, **caractérisé en ce que** le module électronique (38) possède un premier (39) et un second (40) connecteurs pour son alimentation électrique, un troisième (41) et un quatrième (42) connecteurs pour sa liaison avec le dispositif électrique de chauffe (5), et un cinquième connecteur (43) pour mesurer l'alimentation du moteur de ventilation (6) et la comparer avec les bornes de la zone normale de fonctionnement.

5. Appareil de cuisson (1) selon l'une des revendications 1 à 4, **caractérisé en ce que** l'élément de mesure (44) est formé par une résistance de puissance (44) qui permet d'abaisser la tension aux bornes du moteur de ventilation (6) à une tension acceptable par le comparateur (45).

6. Appareil de cuisson (1) selon la revendication 5 dépendante de la revendication 4, **caractérisé en ce que** la résistance de puissance (44) est reliée à la fois au second connecteur (40) qui est branché à la masse et au cinquième connecteur (43) qui est branché à la sortie du moteur de ventilation (6) .

7. Appareil de cuisson (1) selon l'une des revendications 1 à 6, **caractérisé en ce que** le comparateur (45) comprend deux éléments de comparaison (49, 50), chaque élément de comparaison (49, 50) comparant l'alimentation mesurée avec l'une des deux bornes de la zone de fonctionnement.

8. Appareil de cuisson (1) selon l'une des revendications 1 à 7, **caractérisé en ce que** le comparateur (45) comprend une entrée (47) reliée à l'élément de mesure (44) et une sortie (48), fournissant un courant électrique en tout ou rien, reliée au relais de puissance (46).

9. Appareil de cuisson (1) selon la revendication 8 dépendant de la revendication 7, **caractérisé en ce que** chaque élément de comparaison (49, 50) comprend une broche d'entrée qui est reliée à l'entrée (47) du comparateur (45), une broche de sortie qui est reliée à la sortie (48) du comparateur (45), et une broche associée à la borne correspondante de la zone de fonctionnement.

10. Appareil de cuisson (1) selon l'une des revendications 8 ou 9 dépendant de la revendication 4, **caractérisé en ce que** le relais de puissance (46) comporte, d'une part, un actionneur (51) qui est relié à la fois à la sortie (48) du comparateur (45) et au premier connecteur (39) qui est branché à l'entrée du moteur de ventilation (6), et, d'autre part, un interrupteur (52) qui est connecté aux troisième (41) et quatrième (42) connecteurs.

11. Appareil de cuisson (1) selon l'une des revendications 1 à 10, **caractérisé en ce qu'**un fusible (35) est monté en série avec le moteur de ventilation (6).

12. Appareil de cuisson (1) selon l'une des revendications 1 à 10, **caractérisé en ce que** le ventilateur (4) est porté par un châssis (15) qui définit partiellement ledit conduit (9) et comporte une paroi déflectrice (16) entourant à distance, de façon annulaire, le ventilateur, de façon à ménager un canal (17) avec ce dernier.

13. Appareil de cuisson (1) selon l'une des revendications 1 à 12 **caractérisé en ce que** le ventilateur (4) est agencé en amont du dispositif électrique de chauffe (5).

14. Appareil de cuisson (1) selon l'une des revendications 1 à 13, **caractérisé en ce que** l'entrée d'air (10) est formée par une ouverture ménagée dans une paroi délimitant l'enceinte de cuisson (2).

15. Appareil de cuisson (1) selon l'une des revendications précédentes, **caractérisé en ce que** l'air issu du dispositif de production d'air chaud (3) est dévié dans l'enceinte de cuisson (2) par un déflecteur (25) réalisé en matière plastique.

16. Appareil de cuisson (1) selon l'une des revendications précédentes, **caractérisé en ce qu'**il s'agit d'une friteuse électrique (1) avec cuisson par circulation d'un flux d'air chaud dans une cuve (26) disposée dans l'enceinte de cuisson (2).

17. Friteuse (1) selon la revendication 16, **caractérisée en ce qu'**elle comprend une pale (27) montée rotative dans la cuve (26) et adaptée à brasser les aliments et l'huile, et un moteur électrique d'agitation (28) adapté à entraîner la rotation de la pale (27).

## Patentansprüche

1. Gargerät für Lebensmittel (1) aufweisend:
- einen Garraum (2),
- eine Vorrichtung zur Erzeugung von Warmluft (3), umfassend einen Lüfter (4) und eine elektrische Heizvorrichtung (5), die in dem von dem Lüfter (4) erzeugten Luftstrom angeordnet ist,
wobei die Vorrichtung zur Erzeugung von Warmluft (3) in einer Leitung (9) ausgebildet ist, die mit dem Garraum (2) durch einen Lufteinlass (10) und einen Luftauslass (11) verbunden ist, wobei die elektrische Heizvorrichtung eine Luftzufuhr (23) umfasst, die mit dem Lufteinlass (10) verbunden ist, und eine Luftableitung (24), die mit dem Luftauslass (11) verbunden ist,
- einen Lüftermotor (6), der ausgebildet ist, um den Lüfter (4) anzutreiben,
**dadurch gekennzeichnet, dass**:
- es eine Sicherheitsvorrichtung (38) umfasst, die ausgebildet ist, um die elektrische Versorgung der elektrischen Heizvorrichtung (5) zu unterbrechen, wenn der elektrische Verbrauch des Lüftermotors (6) außerhalb eines normalen Betriebsbereichs liegt, der von einer unteren Klemme und einer oberen Klemme bestimmt ist,
- wobei die Sicherheitsvorrichtung (38) umfasst:
* ein Messelement (44), das ausgebildet ist, um den von dem Lüftermotor (6) verbrauchten elektrischen Strom zu messen,
* einen Komparator (45), der ausgebildet ist, um den Verbrauch des Lüftermotors (6) mit der unteren Klemme und der oberen Klemme des normalen Betriebsbereichs zu vergleichen,
* und ein Leistungsrelais (46), das ausgebildet ist, um die elektrische Versorgung der elektrischen Heizvorrichtung (5) in Abhängigkeit vom Ergebnis des Vergleichs zu unterbrechen,
- und der Komparator (45) ein Hysteresephänomen an der unteren Klemme und an der oberen Klemme des normalen Betriebsbereichs aufweist, wodurch eine Versorgung eines resistiven Heizelements (20) der elektrischen Heizvorrichtung (5) gesichert wird, wenn der Lüftermotor (6) arbeitet und wenn die gemessene Stärke im normalen Betriebsbereich liegt.

2. Gargerät (1) nach Anspruch 1, **dadurch gekennzeichnet, dass** die Sicherheitsvorrichtung (38) von einem elektronischen Modul (38) gebildet ist.

3. Gargerät (1) nach Anspruch 2, **dadurch gekennzeichnet, dass** das elektronische Modul (38) in einer Aufnahme in der Nähe des Lüftermotors (6) eingesetzt ist.

4. Gargerät (1) nach Anspruch 2 oder 3, **dadurch gekennzeichnet, dass** das elektronische Modul (38) einen ersten (39) und einen zweiten (40) Verbinder für seine elektrische Versorgung, einen dritten (41) und einen vierten (42) Verbinder für seine Verbindung mit der elektrischen Heizvorrichtung (5) und einen fünften Verbinder (43) zum Messen der Versorgung des Lüftermotors (6) und deren Vergleich mit den Klemmen des normalen Betriebsbereichs besitzt.

5. Gargerät (1) nach einem der Ansprüche 1 bis 4, **dadurch gekennzeichnet, dass** das Messelement (44) von einem Leistungswiderstand (44) gebildet ist, der erlaubt, die Spannung an den Klemmen des Lüftermotors (6) auf eine für den Komparator (45) akzeptable Spannung zu senken.

6. Gargerät (1) nach Anspruch 5 in Abhängigkeit von Anspruch 4, **dadurch gekennzeichnet, dass** der Leistungswiderstand (44) sowohl mit dem zweiten Verbinder (40), der an die Masse angeschlossen ist, als auch mit dem fünften Verbinder (43), der an den Ausgang des Lüftermotors (6) angeschlossen ist, verbunden ist.

7. Gargerät (1) nach einem der Ansprüche 1 bis 6, **dadurch gekennzeichnet, dass** der Komparator (45) zwei Vergleichselemente (49, 50) umfasst, wobei jedes Vergleichselement (49, 50) die mit einer der zwei Klemmen des Betriebsbereichs gemessene Versorgung vergleicht.

8. Gargerät (1) nach einem der Ansprüche 1 bis 7, **dadurch gekennzeichnet, dass** der Komparator (45) einen Eingang (47) umfasst, der mit dem Messelement (44) verbunden ist, und einen Ausgang (48), der einen elektrischen Alles-oder-Nichts-Strom bereitstellt, der mit dem Leistungsrelais (46) verbunden ist.

9. Gargerät (1) nach Anspruch 8 in Abhängigkeit von Anspruch 7, **dadurch gekennzeichnet, dass** jedes Vergleichselement (49, 50) einen Eingangsstift, der mit dem Eingang (47) des Komparators (45) verbunden ist, einen Ausgangsstift, der mit dem Ausgang (48) des Komparators (45) verbunden ist, und einen Stift, der der entsprechenden Klemme des Betriebsbereichs zugeordnet ist, umfasst.

10. Gargerät (1) nach einem der Ansprüche 8 oder 9 in Abhängigkeit von Anspruch 4, **dadurch gekennzeichnet, dass** das Leistungsrelais (46) zum einen einen Aktuator (51), der sowohl mit dem Ausgang (48) des Komparators (45) und mit dem ersten Verbinder (39), der an den Eingang des Lüftermotors (6) angeschlossen ist, verbunden ist, und zum anderen einen Unterbrecher (52), der mit dem dritten (41) und vierten (42) Verbinder verbunden ist, aufweist.

11. Gargerät (1) nach einem der Ansprüche 1 bis 10, **dadurch gekennzeichnet, dass** eine Sicherung (35) mit dem Lüftermotor (6) in Reihe geschaltet ist.

12. Gargerät (1) nach einem der Ansprüche 1 bis 10, **dadurch gekennzeichnet, dass** der Lüfter (4) von einem Gestell (15) getragen wird, welches teilweise die Leitung (9) definiert und eine Deflektorwand (16) aufweist, die beabstandet ringförmig den Lüfter umgibt, so dass mit diesem ein Kanal (17) ausgebildet wird.

13. Gargerät (1) einem der Ansprüche 1 bis 12, **dadurch gekennzeichnet, dass** der Lüfter (4) vor der elektrischen Heizvorrichtung (5) ausgebildet ist.

14. Gargerät (1) nach einem der Ansprüche 1 bis 13, **dadurch gekennzeichnet, dass** der Lufteinlass (10) von einer Öffnung gebildet ist, die in einer Wand ausgebildet ist, welche den Garraum (2) begrenzt.

15. Gargerät (1) nach einem der vorangehenden Ansprüche, **dadurch gekennzeichnet, dass** die Luft aus der Vorrichtung zur Erzeugung von Warmluft (3) von einem Deflektor (25) aus Kunststoff in den Garraum (2) umgeleitet wird.

16. Gargerät (1) nach einem der vorangehenden Ansprüche, **dadurch gekennzeichnet, dass** es sich um eine elektrische Fritteuse (1) mit Garen durch Zirkulation eines Warmluftstroms in einer Wanne (26) handelt, die im Garraum (2) angeordnet ist.

17. Fritteuse (1) nach Anspruch 16, **dadurch gekennzeichnet, dass** sie ein Schaufelrad (27) umfasst, das rotierend in der Wanne (26) angeordnet und ausgebildet ist, um die Lebensmittel und das Öl zu mischen, und einen elektrischen Bewegungsmotor (28), der ausgebildet ist, um die Rotation des Schaufelrads (27) anzutreiben.

## Claims

1. Cooking apparatus for food (1) comprising
- a cooking chamber (2),
- a hot-air production device (3) comprising a fan (4) and an electrical heating device (5) arranged in the airflow generated by the fan (4),
the hot-air production device (3) being arranged in a duct (9) connected to the cooking chamber (2) by an air inlet (10) and an air outlet (11), the electrical heating device comprising an air admission (23) connected to the air inlet (10) and an air discharge (24) connected to the air outlet (11),
- a fan motor (6) adapted to drive the fan (4),
**characterized in that**
- it comprises a safety device (38) adapted to cut the power supply of the electrical heating device (5) when the power consumption of the fan motor (6) is outside a normal operating range defined by a lower limit and an upper limit,
- the safety device (38) comprises :
* a measuring element (44) adapted to measure electric current consumed by the fan motor (6),
* a comparator (45) adapted to compare the consumption of the fan motor (6) to the lower limit and the upper limit of the normal operating range,
* and a power relay (46) adapted to cut the power supply of the electrical heating device (5) as a function of the result of the comparison,
- and the comparator (45) exhibits a hysteresis phenomenon at the lower limit and at the upper limit of the normal operating range, ensuring supply of a resistive heating element (20) of the electrical heating device (5) when the fan motor (6) operates and when the measured intensity is in the normal operating range.

2. The cooking apparatus (1) according to claim 1, **characterized in that** the safety device (38) is formed by an electronic module (38).

3. The cooking apparatus (1) according to claim 2, **characterized in that** the electronic module (38) is inserted into a housing near the fan motor (6).

4. The cooking apparatus (1) according to claim 2 or 3, **characterized in that** the electronic module (38) has a first (39) and a second (40) connector for its power supply, a third (41) and a fourth (42) connector to link with the electrical heating device (5), and a fifth connector (43) for measuring the supply of the fan motor (6) and comparing it to the limits of the normal operating range.

5. The cooking apparatus (1) according to any one of claims 1 to 4, **characterized in that** the measuring element (44) is formed by a power resistor (44) which lowers the voltage at the limits of the fan motor (6) at a voltage acceptable by the comparator (45).

6. The cooking apparatus (1) according to claim 5 depending on claim 4, **characterized in that** the power resistor (44) is connected both to the second connector (40) which is connected to the earth and to the fifth connector (43) which is connected to the outlet of the fan motor (6).

7. The cooking apparatus (1) according to any one of claims 1 to 6, **characterized in that** the comparator (45) comprises two comparison elements (49, 50), each comparison element (49, 50) comparing the measured supply to one of the two limits of the operating range.

8. The cooking apparatus (1) according to any one of claims 1 to 7, **characterized in that** the comparator (45) comprises an inlet (47) connected to the measuring element (44) and an outlet (48), providing On/Off electric current, connected to the power relay (46).

9. The cooking apparatus (1) according to claim 8 dependent on claim 7, **characterized in that** each comparison element (49, 50) comprises an inlet prong which is connected to the inlet (47) of the comparator (45), an outlet prong which is connected to the outlet (48) of the comparator (45), and a prong associated with the corresponding limit of the operating range.

10. The cooking apparatus (1) according to any one of claims 8 or 9 depending on claim 4, **characterized in that** the power relay (46) comprises both an actuator (51) which is connected at the same time to the outlet (48) of the comparator (45) and to the first connector (39) which is connected to the inlet of the fan motor (6), and also a switch (52) which is connected to the third (41) and fourth (42) connectors.

11. The cooking apparatus (1) according to any one of claims 1 to 10, **characterized in that** a fusible (35) is mounted in series with the fan motor (6).

12. The cooking apparatus (1) according to any one of claims 1 à 10, **characterized in that** the fan (4) is carried by a frame (15) which partially defines said duct (9) and comprises a deflecting wall (16) surrounding the fan annularly and with clearance so as to make a channel (17) with the latter.

13. The cooking apparatus (1) according to claim 1 to 12, **characterized in that** the fan (4) is arranged upstream of the electrical heating device (5).

14. The cooking apparatus (1) according to any one of claims 1 to 13, **characterized in that** the air inlet (10) is formed by an opening made in a wall delimiting the cooking chamber (2).

15. The cooking apparatus (1) according to any one of the preceding claims, **characterized in that** the air originating from the hot-air production device (3) is diverted into the cooking chamber (2) by a deflector (25) made of plastic material.

16. The cooking apparatus (1) according to any one of the preceding claims, **characterized in that** it is an electric fryer (1) with cooking by circulation of hot airflow in a tank (26) arranged in the cooking chamber (2.

17. The fryer (1) according to claim 16, **characterized in that** it comprises a blade (27) mounted to rotate in the tank (26) and adapted to stir food and oil, and an electric agitation motor (28) adapted to drive rotation of the blade (27).
